# EUROPEAN PATENT SPECIFICATION

(11) **EP 0 689 386 B1**
(45) Date of publication and mention of the grant of the patent: **05.01.2000**
(21) Application number: 94911109.0
(22) Date of filing: 18.03.1994
(51) Int. Cl.: A23D 7/02

(54) **METHOD FOR PRODUCTION OF A SPREAD**
VERFAHREN ZUR HERSTELLUNG EINES BROTAUFSTRICHES
PROCEDE DE FABRICATION DE PATE A TARTINER

(30) Priority: 19.03.1993 DK 31393
(43) Date of publication of application: 03.01.1996
(73) Proprietor: NOVO NORDISK A/S, 2880 Bagsvaerd (DK)
(72) Inventor: BUDOLFSEN, Gitte, DK-2000 Frederiksberg (DK); NIELSEN, Peder Holk, DK-3670 Vekso (DK)
(74) Representative: Pedersen, Karen Oestergaard
(86) International application number: DK9400111
(87) International publication number: WO9421133

(56) References cited:
- PATENT ABSTRACTS OF JAPAN, Vol. 14, No. 350, C-744; & JP,A,02 128 648 (AJINOMOTO CO INC), 17 May 1990.
- PATENT ABSTRACTS OF JAPAN, Vol. 8, No. 156, C-234; & JP,A,59 059 151 (AJINOMOTO K.K.), 4 April 1984.

## Description

Production of a spread is a well established procedure. Reference can be made to Aage Jart, Kompendium i fedtstofteknologi, III. Nogle fedtholdige levnedsmidler 3. udgave/3. oplag, Den Kgl. Veterinaer- og Landbohøjskole, København, 1982, page 240 - 242. From Gunstone, Lipids in Foods Chemistry, Biochemistry and Technology, Pergamon Press, 1983, it appears that the production of spread or shortening usually involves the following steps: (1) preparation of the individual base stocks and hard fats, (2) formulation, (3) solidifying and plasticizing the blend, (4) packaging, and (5) tempering, if needed. Formulation consists merely in mixing the ingredients in preparation for step (3). Solidification and plasticizing are generally accomplished using scraped surface heat exchangers. In this equipment a steel shaft rotates in a tube which is cooled externally by ammonia. Scraper blades on the rotating shaft, moving at high speeds, are pressed against the cooled inner surface by centrifugal force. The high internal pressure and shearing action cause fast nucleation and crystallization during the short residence time of a few seconds. Typically, the melted fat blend, plus optional ingredients, is chilled rapidly from 46-49°C to 16-18°C. The supercooled melt is then pumped to a large diameter tube fitted with stator pins on the cylinder walls and a high speed rotating shaft equipped with rotor pins. This mechanically works the fat as it passes through the unit, the crystals growing and the mass partially solidifying. The "working" extends the plastic range of the product. Inert gas (10-20%) or air may be added here and dispersed in the shortening as small bubbles to improve the whiteness of the product. This may also contribute to creaming ability. The plastic mass is now pumped through a homogenizing valve and finally to package fillers. Containers may range in size from 0.45 kg to 172 kg drums. When tempering is needed, the packaged product is normally held for 24-72 hours in a constant temperature room, ususally at 27-32°C. During tempering, crystallization proceeds slowly and the crystal structure is stabilized against changes that might otherwise take place during subsequent temperature variations encountered during normal handling and storage. However, should the product be allowed to be warmed above the melting point of the lowest melting polymorphic form, the structure is lost and the product must be melted and reprocessed.

It appears that the prior art method for production of spread is rather laborious and time consuming, due to the sensitive crystallization process in the tube cooler.

Thus, the purpose of the invention is the provision of a method for production of a spread which is simpler than the prior art method and which does not involve the sensitive crystallization.

The method according to the invention for production of a spread, wherein a water phase containing a protein containing material is mixed with a fat phase containing an emulsifier and a fat mixture, is characterized by the fact that the method comprises the following steps in the sequence indicated: 1) the water phase, which contains the protein, is treated with transglutaminase, at a temperature, at which transglutaminase is active, 2) the pH-value is adjusted to 4.8 to 5.8, 3) the water phase is tempered to a temperature between 20 and 40°C, and the fat phase is tempered to a temperature between 25 and 45°C, 4) the tempered water phase and the tempered fat phase are mixed until an emulsion is formed, and 5) the formed emulsion is heat treated to a temperature between 45 and 100°C. It can be noted that a gelation takes place during step 5).

It is to be understood that the method comprising the fact that step 5) is omitted, and that a similar heat treatment is carried out on the water phase between steps 2) and 3) is an embodiment of the method according to the invention. In this embodiment a gelation of the water phase occurs during the heat treatment of the water phase between steps 2) and 3).

Also it is to be understood that the water phase in step 1) can be reconstituted by removal and later addition of water. Thus, if convenient from a production point of view, the water phase can be formed as indicated in step 1), the water can be removed, e.g. by vacuum destillation, the formed dry phase can be stored and/or transported to another factory, and the water phase can be reconstituted by addition of water.

Thus, the method according to the invention does not involve the sensitive crystallization. Furthermore, the addition of transglutaminase makes it possible to reduce pH without precipitation of protein. pH-reduction is desirable from an organoleptical point of view and for shelf life reasons.

It goes without saying that the heat treatment in step 5) is interrupted after a certain duration, normally 1 minute.

Both in relation to prior art methods and to the method according to the invention flavors and colorants can be added to the spread.

From Leatherhead, Research reports, July 1992, No. 695 it appears that spreads can be produced by means of a water phase containing skim milk; however, caseinates, alginates or gelatine or corresponding stabilizers have to be present, too, and the spread is produced by means of the prior art method with its previously indicated technical disadvantages.

Also, it appears from Japanese published patent application 3-160957 that a water phase containing skim milk powder to which transglutaminase has been added is able to form a gel by heating. However, this prior art method does not involve the mixing with a fat phase, reduction of pH, and the subsequent production of a spread.

A preferred embodiment of the method according to the invention is characterized by the fact that the amount of the water phase is at least 15% (w/w) of the total amount of the water phase and the fat phase, and that the amount of the fat phase is at least 5% (w/w) of the total amount of the water phase and the fat phase. In this manner a spread with a good spreadability is generated.

A preferred embodiment of the method according to the invention is characterized by the fact that the protein is skim milk powder from cow milk, caseinate, heat denatured whey protein from milk, or gelatin. Such proteins are easily available starting materials.

A preferred embodiment of the method according to the invention is characterized by the fact that the transglutaminase is of human, of bovine or of microbial origin. These categories of transglutaminase are easily available and perform well in relation to the invention.

A preferred embodiment of the method according to the invention is characterized by the fact that in step 2) the pH value is adjusted to 5.0 to 5.2. In this embodiment a satisfactory consistency of the spread is obtained.

The method according to the invention will be illustrated by the following example.

### EXAMPLE 1

### Step 1

Skim milk powder is suspended in water to a protein concentration of 8%, corresponding to 114 g of skim milk powder in 386 g of demineralized water. CaCl₂ is added to a concentration of 5 mM Ca⁺⁺. 0.16 g of activated factor XIII is added to the skim milk powder suspension, and the temperature is kept at 37°C for 45 minutes. 4.0 g salt is added to the skim milk solution, and the transglutaminase is inactivated by heating to 80°C for 5 minutes in a microwave oven. The total quantity is cooled to 20°C.

### Step 2

The pH value is adjusted to 5.0.

### Step 3

120 g of hardened vegetable fat is mixed with 280 g of soy oil, and the mixture is melted at 47°C. 6.25 g of the emulsifier Dimodan OT (a monoglyceride of a long chain fat acid) is added to 25 ml of the oil mixture, and the temperature is raised to 55°C in order to melt the emulsifier. The emulsifier mixture is mixed into the remaining part of the oil mixture, and the resulting mixture is tempered at 35°C; this is the fat phase. Also, the water phase from step 2) is tempered to 30°C.

### Step 4

The fat phase (78.0 g) and the water phase (122 g) from step 3 are mixed by means of a Silverson mixer.

### Step 5

The emulsion from step 5 is immediately heat treated in a microwave oven for 32 seconds with an effect of 520 watt.

In this manner a spread with good spreadability and good organoleptic characteristics is produced.

## Claims

1. Method for production of a spread, wherein a water phase containing a protein containing material is mixed with a fat phase containing an emulsifier and a fat mixture, characterized by the fact the method comprises the following steps in the sequence indicated: 1) the water phase, which contains the protein, is treated with transglutaminase, at a temperature, at which transglutaminase is active, 2) the pH-value is adjusted to 4.8 to 5.8, 3) the water phase is tempered to a temperature between 20 and 40°C, and the fat phase is tempered to a temperature between 25 and 45°C, 4) the tempered water phase and the tempered fat phase are mixed until an emulsion is formed, and 5) the formed emulsion is heat treated to a temperature between 45 and 100°C.

2. Method according to Claim 1, characterized by the fact that the amount of the water phase is at least 15% (w/w) of the total amount of the water phase and the fat phase, and that the amount of the fat phase is at least 5% (w/w) of the total amount of the water phase and the fat phase.

3. Method according to Claim 1 or 2, characterized by the fact that the protein is skim milk powder from cow milk, caseinate, heat denatured whey protein from milk, or gelatin.

4. Method according to Claims 1 - 3, characterized by the fact that the transglutaminase is of human, of bovine or of microbial origin.

5. Method according to Claims 1 - 4, characterized by the fact that in step 2) the pH value is adjusted to 5.0 to 5.2.

## Patentansprüche

1. Verfahren zur Herstellung eines Aufstriches, wobei eine Wasserphase, die ein proteinhaltiges Material enthält, mit einer Fettphase, die einen Emulgator und ein Fettgemisch enthält, vermischt wird, dadurch gekennzeichnet, daß das Verfahren die folgenden Schritte in der angegebenen Reihenfolge umfaßt: 1) Die Wasserphase, die das Protein enthält, wird mit Transglutaminase bei einer Temperatur behandelt, bei der die Transglutaminase aktiv ist, 2) der pH-Wert wird auf 4,8 bis 5,8 eingestellt, 3) die Wasserphase wird auf eine Temperatur zwischen 20 und 40 °C temperiert, und die Fettphase wird auf eine Temperatur zwischen 25 und 45 °C temperiert, 4) die temperierte Wasserphase und die temperierte Fettphase werden gemischt, bis sich eine Emulsion gebildet hat, und 5) die gebildete Emulsion wird bei einer Temperatur zwischen 45 und 100 °C wärmebehandelt.

2. Verfahren nach Anspruch 1, dadurch gekennzeichnet, daß die Menge der Wasserphase wenigstens 15 % (Gew./Gew.) der Gesamtmenge von Wasserphase und Fettphase beträgt und daß die Menge der Fettphase wenigstens 5 % (Gew./Gew.) der Gesamtmenge von Wasserphase und Fettphase beträgt.

3. Verfahren nach Anspruch 1 oder 2, dadurch gekennzeichnet, daß das Protein Magermilchpulver aus Kuhmilch, Caseinat, wärmedenaturiertes Molkeprotein aus Milch oder Gelatine ist.

4. Verfahren nach den Ansprüchen 1 - 3, dadurch gekennzeichnet, daß die Transglutaminase vom Menschen, vom Rind oder aus Mikroorganismen stammt.

5. Verfahren nach den Ansprüchen 1-4, dadurch gekennzeichnet, daß in Schritt 2) der pH-Wert auf 5,0 bis 5,2 eingestellt wird.

## Revendications

1. Procédé pour la production d'une pâte à étaler ou à tartiner dans laquelle une phase eau contenant un matériau incorporant une protéine est mélangé avec une phase matière grasse contenant un émulsifiant et un mélange matière grasse, procédé caractérisé par le fait qu'il comprend les étapes suivantes dans la séquence indiquée : 1) la phase eau qui contient la protéine est traitée avec la transglutaminase à une température à laquelle la transglutaminase est active, 2) la valeur du pH est ajustée à 4,8 jusqu'à 5,8 ,3) la phase eau est trempée à une température entre 20 et 40°C, et la phase matière grasse est trempée à une température entre 25 et 45°C, 4) la phase eau trempée et la phase matière grasse trempée sont mélangées jusqu'à formation d'une émulsion et 5) l'émulsion formée est traitée à chaud jusqu'à une température entre 45 et 100°C.

2. Procédé selon la revendication 1, caractérisé par le fait que la quantité de phase eau est d'au moins 15% en poids de la quantité totale de la phase eau et de la phase matière grasse, et que la quantité de la phase matière grasse est d'au moins 5% en poids de la quantité totale de la phase eau et de la phase matière grasse.

3. Procédé selon la revendication 1 ou 2, caractérisé par le fait que la protéine et la poudre de lait écrémé provenant du lait de vache, caséinate, protéine de petit lait dénaturé à la chaleur provenant de lait, ou gélatine.

4. Procédé selon les revendications 1 à 3, caractérisé par le fait que la transglutaminase est d'origine humaine, bovine ou microbienne.

5. Procédé selon les revendications 1 à 4, caractérisé par le fait que dans l'étape 2) la valeur du pH est ajustée de 5,0 jusqu'à 5,2.
